# EUROPEAN PATENT APPLICATION

(11) **EP 4 783 428 A1**
(43) Date of publication of application: **29.07.2026**
(21) Application number: 25153728.8
(22) Date of filing: 24.01.2025
(51) Int. Cl.: H02K 7/08, H02K 7/14, H02K 9/12, H02K 16/00

(54) **MARINE PROPULSION UNIT**

(71) Applicant: ABB Oy, 00380 Helsinki (FI)
(72) Inventor: SAKKINEN, Petri, 00980 Helsinki (FI); PELJO, Veli-Pekka, 00980 Helsinki (FI); KATAINEN, Mikko, 00980 Helsinki (FI); JEHKONEN, Teemu, 00980 Helsinki (FI); VARTIAINEN, Ari, 00380 Helsinki (FI); KOLONDJOVSKI, Zlatko, 00380 Helsinki (FI)
(74) Representative: Zimmermann & Partner Patentanwälte mbB

(57) **Abstract**

A marine propulsion unit with a motor air cooling system and a contra rotating motor having an inner rotor and an outer rotor, wherein the contra rotating motor comprises a perforated tube with a plurality of radial openings, the perforated tube being configured to transmit a torque of the outer rotor to a propeller unit and to support an outer rotor winding; the motor air cooling system comprises at least one ingoing air channel and at least one outgoing air channel; and the at least one ingoing air channel is connected to the at least one outgoing air channel via at least some of the plurality of radial openings of the perforated tube.

## Description

### TECHNICAL FIELD

Embodiments of the present disclosure relate to a marine propulsion unit. Further embodiments relate to a method of cooling a contra rotating motor of a marine propulsion unit.

### BACKGROUND

To propel marine vessels, marine propulsion units with a high efficiency and maneuverability are desired. Azimuthing propulsion units may generally provide marine propulsion units with a high efficiency and maneuverability. In azimuthing propulsion units, at least one marine propeller attached to a rotatable pod provides thrust. A direction of the thrust may be controlled via a rotation of the rotatable pod. In typical azimuthing propulsion units, at least one electric motor driving the at least one marine propeller is integrated in the pod.

For an efficient marine propulsion unit, contra rotating propellers may be employed. For driving a contra rotating propeller, a contra rotating electric motor can be suitable. However, reliable and efficient cooling systems for the contra rotating motor are required.

### DISCLOSURE OF THE INVENTION

In the view of the foregoing, the present disclosure is directed to a marine propulsion unit and a method of cooling a contra rotating motor of a marine propulsion unit.

According to an aspect of the present disclosure, a marine propulsion unit with a motor air cooling system and a contra rotating motor having an inner rotor and an outer rotor is provided. The contra rotating motor comprises a perforated tube with a plurality of radial openings, the perforated tube being configured to transmit a torque of the outer rotor to a propeller unit and to support an outer rotor winding. The motor air cooling system comprises at least one ingoing air channel and at least one outgoing air channel. The ingoing air channel is connected to the outgoing air channel via at least some of the plurality of radial openings of the perforated tube.

According to another aspect of the present disclosure, a marine vessel comprising a marine propulsion unit according to any of the embodiments described herein is provided.

According to another aspect of the present disclosure, a method of cooling a contra rotating motor with an outer rotor and an inner rotor of a marine propulsion unit is provided. The contra rotating motor comprises a perforated tube configured to transmit a torque of the outer rotor to a propeller unit and configured to support an outer rotor winding. The method comprises providing cooling air to the contra rotating motor and drawing the cooling air from the contra rotating motor via the perforated tube.

According to some embodiments, the marine propulsion unit is configured to propel a marine vessel. Typically, the marine propulsion unit comprises an azimuthing marine unit. In particular, the marine vessel may comprise at least one marine propulsion unit according to embodiments described herein. The marine vessel as described herein comprises seagoing or inland marine vessels. In particular, the marine vessel comprises ships and boats. In some embodiments, the marine vessel comprises merchant ships, in particular for transporting goods. In particular, the marine vessel may comprise a container vessel, a Ro-Ro or car carrier, a tanker or shuttle tanker, a liquid natural gas (LNG) carrier or a floating storage and regasification unit. In some embodiments, the marine vessel comprises ferries, in particular single- and double-ended ferries, cruise ships, water buses, yachts. In some embodiments, the marine vessel comprises offshore energy vessels, in particular service operation vessels (SOVs), cable laying vessels (CLVs), foundation installation vessels (FIVs), offshore construction (OCVs) and support vessels (OSVs), platform supply vessels (PSVs), and anchor-handling tug supply vessels (AHTS). In some embodiments, the marine vessel comprises research and survey vessels or other special purpose vessels, such as dredgers, heavy lift vessels or towboats. In some embodiments, the marine vessel comprises ice-going marine vessels, in particular icebreakers. In some embodiments, the marine vessel may comprise navy or coast guard vessels.

The marine vessel typically comprises a hull. A pod of the marine propulsion unit, and particularly of the azimuthing propulsion unit, is attached to the hull of the marine vessel, in particular at the bottom of the hull. Typically, the hull defines a vessel interior and a vessel exterior. Space confined by the hull and configured to be isolated from sea water may be defined as the vessel interior. Space outside the hull, and in particular the sea, may be defined as the vessel exterior. Typically, the vessel interior is substantially free of sea water and substantially dry.

In some embodiments, the marine vessel may comprise a plurality of marine propulsion units. In particular, the marine vessel may comprise 2, 3, 4, or more marine propulsion units. Typically, each of the plurality of marine propulsion units may be controlled separately. In some embodiments, the marine vessel may comprise a single azimuthing propulsion unit with a single pod. In some embodiments, at least one azimuthing propulsion unit may be combined with one or more further marine propulsion unit on a single marine vessel. In other words, an azimuthing propulsion unit according to embodiments described herein may be combined with one or more non-azimuthing marine propulsion units. The one or more non-azimuthing marine propulsion units may be built according to embodiments described herein.

Typically, the marine propulsion unit comprises a propeller unit. Typically, the marine propulsion unit, and particularly the azimuthing propulsion unit, comprises a pod with a pod hull. The pod is configured to be rotatably attached to the hull of the marine vessel, particularly at the bottom of the hull of the marine vessel. The pod may be rotated about a substantially vertical rotation axis of the marine propulsion unit. In particular, the pod may be rotated by at least 270°, at least 315° or at least 360° about the substantially vertical rotation axis of the azimuthing propulsion unit. In typical embodiments, the rotation of the pod about the substantially vertical rotation axis of the azimuthing propulsion unit is not restricted, in particular not mechanically restricted.

Typically, the pod comprises a hull cap at a first end of the pod and the propeller unit, in particular a pushing or pulling propeller unit, attached to a second end of the pod. The first end of the pod may also be described as non-driving end, NDE, and the second end of the pod may also be described as driving end, DE, of the pod. The propeller unit typically rotates about a rotation axis of the propeller unit. The rotation axis of the propeller unit may be substantially perpendicular to the vertical rotation axis of the azimuthing propulsion unit.

In typical embodiments, the propeller unit comprises an outer shaft propeller and an inner shaft propeller. Typically, the outer shaft propeller is arranged closer to the hull than the inner shaft propeller. In a pushing propeller unit, the outer shaft propeller may also be described as front propeller and the inner shaft propeller may be described as the rear propeller; and vice versa for a pulling propeller unit. In particular, the outer shaft propeller is arranged closer to the vertical rotation axis than the inner shaft propeller. Typically, the outer shaft propeller and the inner shaft propeller are arranged adjacent to each other. The outer shaft propeller and the inner shaft propeller rotate about the rotation axis of the propeller unit.

Typically, the propeller unit comprises a contra rotating propeller unit. In particular, the outer shaft propeller may be configured to rotate in a first direction, particularly about the rotation axis of the propeller unit, and the inner shaft propeller may be configured to rotate in a second direction opposite to the first direction, particularly about the rotation axis of the propeller unit. In other words, the outer shaft propeller may rotate clockwise and the inner shaft propeller may rotate counterclockwise, or vice versa, about the same rotation axis. A contra rotating propeller unit may advantageously allow for a higher hydrodynamic efficiency than other propeller concepts, in particular with respect to single propellers.

In some embodiments, the outer shaft propeller has a first diameter and the inner shaft propeller has a second diameter with the second diameter being different from the first diameter, particularly the first diameter being larger than the second diameter. Typically, the outer shaft propeller comprises a first number of first blades and the inner shaft propeller comprises a second number of second blades. Typically, the second number may be different from the first number. The outer shaft propeller may comprise 3, 4, 5, 6 or 8 first blades. The inner shaft propeller may comprise 3, 4, 5, 6 or 8 second blades. In some embodiments, the outer shaft propeller comprises one more first blade than the inner shaft propeller comprises second blades. Exemplarily, the outer shaft propeller comprises 6 first blades and the inner shaft propeller comprises 5 second blades. In some embodiments, the outer shaft propeller and the inner shaft propeller may comprise the same number of blades, in particular 3, 4, 5, 6 or 8 first and second blades, respectively. The outer shaft propeller and/or the inner shaft propeller may each be manufactured as a monoblock or in components, as a built-up propeller.

Typically, the propeller unit is driven by an electric motor. Typically, the electric motor has a power of at least 100 kW, at least 1 MW, at least 2 MW, at least 5 MW, at least 10 MW or at least 15 MW. The electric motor is typically arranged within the pod. Particularly, the electric motor is mechanically connected to the propeller gearlessly. Typically, a rotation axis of the electric motor is identical to a rotation axis of the propeller unit. In particular, an output shaft of the electric motor may be identical to the drive shaft of the propeller unit or may be gearlessly connected to a drive shaft of the propeller unit. The output shaft of the electric motor typically is coaxial to the drive shaft of the propeller unit. In typical embodiments, for a propeller unit comprising an outer shaft propeller and an inner shaft propeller, in particular for the contra rotating propeller unit, the outer shaft propeller and the inner shaft propeller may be driven by the same electric motor.

The electric motor typically comprises a contra rotating electric motor. In particular, the contra rotating electric motor comprises a dual rotor electric motor with an outer rotor and an inner rotor configured to rotate in opposite directions about a rotation axis of the electric motor. Typically, the rotation axis of the electric motor may be coaxially with the rotation axis of the propeller unit. Typically, the electric motor is a synchronous electric motor. Typically, the outer rotor comprises windings to be supplied with an electric current for the operation of the electric motor. The inner rotor may be a permanent magnet rotor or an externally excited synchronous rotor.

In some embodiments, the drive shaft of the propeller comprises an outer shaft and an inner shaft. Outer shaft and inner shaft are typically coaxially arranged. Typically, the outer rotor drives the outer shaft. The outer shaft is typically mechanically connected to the outer shaft propeller gearlessly. Typically, the inner rotor drives the inner shaft. The inner shaft is typically mechanically connected to the inner shaft propeller gearlessly. Typically, the inner shaft is arranged inside the outer shaft; in other words, an inside radius of the outer shaft exceeds an outside radius of the inner shaft. The inner shaft and the outer shaft rotate about the same rotation axis, and in particular about the rotation axis of the electric motor. Typically, the inner shaft is supported in the pod by a drive end, DE, inner bearing and a non-drive end, NDE, inner bearing. Typically, the outer shaft is supported in the pod by a drive end, DE, outer bearing and a non-drive end, NDE, outer bearing. The NDE inner bearing and/or the NDE outer bearing may each comprise an axial bearing and a radial bearing, particularly within the same bearing housing. Employing a contra rotating electric motor may advantageously allow to drive the contra rotating propeller with a single electric motor gearlessly. Thereby, a more compact and efficient drive train may be provided.

In some embodiments, the marine propulsion unit comprises a motor air cooling system, particularly for cooling the contra rotating motor. The motor air cooling system typically comprises at least one ingoing air channel and at least one outgoing air channel. In some embodiments, the motor air cooling system comprises one ingoing air channel or two ingoing air channels. In some embodiments, the number of ingoing air channels may be different from the number of outgoing air channels, and particularly the number of outgoing air channels may exceed the number of ingoing air channels. Typically, an ingoing air channel may be defined as an air channel through which the air of the motor cooling system passes prior to interacting with the motor, in particular prior to cooling the motor. Typically, an outgoing air channel may be defined as an air channel through which the air of the motor cooling system passes subsequent to interacting with the motor, in particular subsequent to cooling the motor. However, in some embodiments, a direction of the air flow may be reversible. Particularly, an air channel may be both an ingoing air channel and an outgoing air channel, depending on an operation of the motor air cooling system.

Typically, the contra rotating motor comprises a perforated tube. The perforated tube may substantially have a cylinder shape, particularly with a cage-like structure. In some embodiments, the perforated tube may, at least in part, form an outer contour of the contra rotating motor. The perforated tube is configured to transmit a torque of the outer rotor to the propeller unit. The perforated tube supports an outer rotor winding of the outer rotor. Particularly, the outer rotor winding is connected to the perforated tube. In some embodiments, the outer rotor comprises a plurality of axial beams between a core of the outer rotor winding and the perforated tube. In particular, the outer rotor may comprise at least 3, at least 6, at least 12, or at least 24 axial beams. Typically, the axial beams are arranged parallel to an axis, particularly the rotating axis, of the perforated tube. Typically, the plurality of axial beams is arranged substantially parallel with respect to each other. The plurality of axial beams is typically configured to transmit a torque from the outer rotor core, which particularly accommodates the windings, to the perforated tube. The plurality of axial beams are configured to allow air to flow from an interior of the motor, particularly via radial slots in a core of the outer rotor winding of the outer rotor, towards the perforated tube, and particularly towards the radial openings in the perforated tube. The core of the outer rotor winding typically is a steel core.

The perforated tube typically comprises a plurality of radial openings. Exemplarily, the perforated tube may comprise at least 6, at least 12, at least 24, at least 50, at least 72, at least 100, or at least 200 radial openings. Typically, the plurality of radial openings are substantially quadratically with rounded corners. In some embodiments, the plurality of radial openings are substantially oval, and particularly round, or substantially triangular. Oval or triangular openings may advantageously alter the strength of the perorated tube. In some embodiments, the plurality of radial openings is arranged substantially symmetrical, particularly with respect to at least one axis of the perforated tube. In some embodiments, the plurality of radial openings may be arranged according to a pattern, particularly according to a quadratical or a triangular pattern. The plurality of radial openings may be arranged substantially rotational symmetrically about the rotational axis of the perforated tube. Rotational symmetry may particularly comprise a n-fold rotational symmetry with n being any natural number exceeding 1, and particularly exceeding 2. The plurality of radial openings may be arranged substantially mirror symmetrically, particularly with respect to a plane perpendicular to the rotational axis of the perforated tube.

In typical embodiments, the plurality of radial openings cover at least 10%, at least 20%, at least 25%, at least 35%, at least 50%, at least 70%, or at least 80% of a side surface of the perforated tube. Typically, the plurality of radial openings cover at most 90% of a side surface of the perforated tube. In particular, the plurality of radial openings cover at least 25% and at most 90 % of as side surface of the perforated tube. In some embodiments, the side surface of the perforated tube may comprise the area of the perforated tube in which the radial openings are arranged.

In typical embodiments, the plurality of openings is equally spaced with respect to each other in at least one dimension and particularly with respect to two dimensions. Exemplarily, the plurality of openings is equally spaced with respect to a radial and/or an axial dimension. In some embodiments, the plurality of openings may be equally spaced in a first direction and may be arranged with a decreasing distance in a second dimension, in particular towards the center of the perforated tube. The plurality of openings may be considered as equally spaced when neighboring openings have the same distance from each other in at least one dimension. A spacing of the plurality of openings may be advantageously adapted to a heat generation distribution of the electric motor and/or to an air flow within the electric motor. Particularly, the spacing of the plurality of openings may be adapted to ensure a substantially homogeneous cooling effect in the electric motor and/or to avoid hot spots.

The ingoing air channel is connected to the outgoing air channel via the perforated tube. Particularly, the ingoing air channel is connected to the outgoing air channel via at least some of the plurality of radial openings of the perforated tube. Typically, the plurality of radial openings comprises first openings connected to the at least one ingoing air channel and comprises second openings connected to the at least one outgoing air channel. The motor air cooling system is arranged such that at least part of the air from the at least one ingoing air channel enters the contra rotating motor via the first openings and exits the contra rotating motor via the second openings. Typically, the at least one outgoing air channel is connected to at least 50%, at least 60%, at least 70%, at least 80% or at least 90% of the plurality of radial openings. In other words, at least 50%, at least 60%, at least 70%, at least 80% or at least 90% of the plurality of radial openings are second openings. Particularly, air passing through the motor and exiting the motor may exit the perforated tube through at least 50%, at least 60%, at least 70%, at least 80% or at least 90% of the plurality of radial openings.

Typically, the at least one ingoing air channel is connected to at least 2%, at least 5%, at least 10%, at least 20% or at least 40% of the plurality of radial openings. In other words, at least 2%, at least 5%, at least 10%, at least 20% or at least 40% of the plurality of radial openings are first openings. The at least one ingoing air channel is typically connected to at most 50% or at most 60% of the plurality of radial openings. In other words, at most 50% or at most 60% of the plurality of radial openings are first openings. Particularly, air provided by the motor air cooling system and entering the motor may enter the motor via the perforated tube through at least 2%, at least 5% or at least 10%, at least 20% or at least 40% and/or at most 50% or at most 60% of the plurality of radial openings.

In typical embodiments, each of the plurality of radial openings is connected to either the at least one ingoing air channel or the at least one outgoing air channel. In other words, for each of the plurality of radial openings, cooling air provided by the motor air cooling system either enters the electric motor via the radial opening or exits the electric motor via the radial opening. Typically, each of the plurality of radial openings either is a first opening or a second opening.

Typically, the first openings and the second openings are separated by at least one air slot separating wall between the air slots and the perforated tube. The at least one air slot separating wall is configured to ensure that air entering via the first openings passes through the outer rotor, and particularly through the radial air slots in the outer rotor core, prior to exiting the outer rotor via the second openings. The at least one air slot separating wall is substantially perpendicular to the rotation axis of the perforated tube.

Typically, the motor propulsion unit comprises an outer rotor air sealing for sealing a gap between the outer rotor, which rotates in operation, and a stationary part, exemplarily a motor housing. The outer rotor air sealing may advantageously prevent air passing from the ingoing air channel to the outgoing air channel without passing the outer rotor. Particularly, the outer rotor air sealing may reduce an air fan power required to cool the motor. The outer rotor air sealing typically comprises a small gap, a labyrinth seal or a soft seal.

Typically, the outer rotor is connected to the outer shaft via at least one outer rotor end flange. The at least one outer rotor end flange typically comprises at least one flange opening. Particularly, the at least one outer rotor end flange comprises a plurality of flange openings, exemplarily at least 3 flange openings, at least 5 flange openings or at least 8 flange openings. Typically, the plurality of flange openings are arranged symmetrically, particularly according to an n-fold rotational symmetry with n being a natural number exceeding 1 or 2. The at least one flange opening typically extends substantially parallel to the rotational axis of the perforated tube. Typically, at least some of the at least one flange opening, particularly all of the at least one flange opening, are connected to the at least one ingoing air channel. Typically, at least part of the air entering the motor enters the motor through the at least one flange opening. Particularly, at least 2%, at least 5%, at least 10% or at least 20% of the air entering the motor enters the motor through the at least one flange opening.

Typically, the outer rotor is connected on both axial ends to the outer shaft via an outer rotor end flange. Particularly, the outer rotor is connected to the drive end (DE) outer shaft via a DE outer rotor end flange and is connected to the non-drive end (NDE) outer shaft via the NDE outer rotor end flange. In typical embodiments, the NDE outer rotor end flange and the DE outer rotor end flange both comprise at least one flange opening and are both connected to at least one ingoing air channel. Typically, an amount of air flowing into the motor via the at least one flange opening of the NDE outer rotor end flange and via the at least one flange opening of the DE outer rotor end flange varies by at most 5%, at most 10% or at most 20%. A similar air flow through the outer rotor end flange on both axial ends of the outer rotor may advantageously enable a homogenous air flow through the motor and a homogenous cooling of the motor.

In typical embodiments, a majority of the air passing through the at least one ingoing air channel enters the outgoing air channel via the perforated tube. In some embodiments, a part of the air passing thought the at least one ingoing air channel may be configured to cool other elements of the marine propulsion unit, exemplarily a slip ring unit. Typically, the air passing through the at least one ingoing air channel may be divided prior to reaching parts of the marine propulsion unit to be cooled. Exemplarily, the air passing through the at least one ingoing air channel may be divided prior to reaching the motor and the slip ring unit. In some embodiments, different parts of the motor air cooling system may be separated by one or more filters, in particular to reduce or to avoid contamination of different parts of the marine propulsion unit by the air passing through the motor air cooling system. In some embodiments, different parts of the motor air cooling system may be cooled subsequently. In other words, after cooling a first part of the marine propulsion unit, air is used to cool a second part of the marine propulsion unit, particularly prior to reaching an air cooling stage, such as a heat exchanger.

Typically, at least 80%, at least 90%, at least 95% or at least 99% of air passing through the at least one ingoing air channel enters the at least one outgoing air channel via the perforated tube. Ensuring a high fraction of the air, particularly of the volume of the air, passing through the perforated tube may advantageously allow an efficient cooling of the motor and may reduce a required air fan power.

In typical embodiments, the motor air cooling system is configured to first guide air along an axial direction of the perforated tube and subsequently in a radial direction of the perforated tube. In particular, air may enter the perforated tube via at least one flange opening and/or via radial openings of the plurality of radial openings adjacent to the outer rotor end flanges and may exit the perforated tube radially via radial openings of the plurality of radial openings, particularly arranged towards the center of the perforated tube.

Typically, the motor air cooling system is preferably configured such that the temperature of the air remains substantially identical in axial direction. Substantially identical may comprise a temperature difference in axial direction being at most 5%, at most 10% or at most 15% of the lowest temperature of air in the motor. In some embodiments, the motor air cooling system may comprise at least one temperature sensor, particularly a plurality of temperature sensors. Typically, the motor air cooling system may control an air flow, exemplarily by controlling an air fan setting or an air fan power, based upon at least one temperature signal of the at least one temperature sensor. In some embodiments, the motor air cooling system may comprise deflection or control shields to control an air flow within the motor to provide a substantially identical temperature of the air in axial direction. The flection or control shields may be fixed or controllable.

The at least one temperature sensor may comprise a physical temperature sensor, exemplarily a thermometer, or a virtual temperature sensor extrapolating a temperature from non-temperature sensor data, exemplarily motor performance data, being provided to a controller, exemplarily an air fan controller.

Typically, the motor air cooling system is arranged such that air from the ingoing air channel enters the perforated tube at a first axial position of the perforated tube and exits the perforated tube at a second axial position of the perforated tube, with the second axial position being closer to a center of the perforated tube than the first axial position. The center of the perforated tube may particularly be at an axial center, or at a middle axial length of the perforated tube. Particularly, within the perforated tube, air flows substantially axially from the first axial position to the second axial position. The first axial position may be associated with a position of the at least one outer rotor end flange and/or with radial openings of the plurality of radial openings being connected to the at least one ingoing air channel. The second axial position may be associated with radial openings of the plurality of radial openings being connected to the at least one outgoing air channel. The motor air cooling system being configured such that air enters the perforated tube at a first axial position and exits the perforated tube at a second axial position with the second axial position being closer to the center of the perforated tube than the first axial position may advantageously be associated with a balanced temperature distribution in the motor, and/or may advantageously be associated with sealings, bearings or flanges not being heated by the air already having passed though the motor. However, in some embodiments, the motor cooling system may be arranged in reverse, particularly such that the air enters the perforated tube at the second axial position and exits the perforated tube at the first axial position. For some embodiments, a heating of components of the marine propulsion unit may be desired and air exiting the perforated tube may be employed to achieve such a heating effect.

Typically, the motor air cooling system is configured to guide air along an axial direction of the perforated tube for ensuring an at least substantially equal convective heat transfer along the axial direction of the perforated tube from the inner rotor and/or the outer rotor to the air.

Typically, the motor air cooling system is arranged such that air from the at least one ingoing air channel enters the contra rotating motor via the at least one flange opening and exits the contra rotating motor via at least part of the plurality of radial openings, particularly through the second radial openings. In some embodiments, the direction of the air flow may be reversed. Thus, the air may enter the contra rotating motor via at least part of the plurality of radial openings and exits the contra rotating motor via the at least one flange opening.

Typically, the motor air cooling system is arranged such that a first part of the air entering the motor enters the motor via the at least one flange opening and a second part of the air enters the motor via at least part of the plurality of radial openings, particularly via the first radial openings. In some embodiments, a majority of the air enters the motor via at least part of the plurality of radial openings, particularly via the first radial openings. Exemplarily, at least 60%, at least 70% or at least 80% of the air enters the motor via at least part of the plurality of radial openings, particularly via the first radial openings. In some embodiments, the ratio of the air entering via the at least one flange opening and via at least part of the plurality of radial openings may be variable, and particularly controllable.

In some embodiments, the marine propulsion unit comprises at least one air channel separating wall. The at least one air channel separating wall may separate the at least one ingoing air channel and the at least one outgoing air channel. Particularly, the at least one air channel separating wall ensures that the air passes through the components to be cooled, in particular through the motor and the perforated tube and/or the slip ring unit. In some embodiments, the at least one air channel separating wall may be configured to separate different streams of the ingoing air. Exemplarily, part of the ingoing air may be separated to cool the motor while another part of the ingoing air is separated to cool the slip ring unit. The at least one air channel separating wall may further avoid leaking of the closed loop air cooling system or contamination of the air within the closed loop air cooling system.

Typically, the motor air cooling system further comprises an air fan and a heat exchanger. The air fan is typically configured to propel air through the motor air cooling system. Particularly, the air fan may provide cooling air to the contra rotating motor and may draw the cooling air from the contra rotating motor via the perforated tube, particularly after cooling the contra rotating motor. Typically, the air fan is configured to generate an overpressure in the ingoing air channel and a negative pressure in the outgoing air channel.

Typically, the heat exchanger may be configured to cool the air of the motor air cooling system, particularly to remove heat received from the components of the marine propulsion unit, exemplarily from the motor. The heat exchanger may comprise a gas-to-liquid heat exchanger. In some embodiments, the air may be cooled using sea water, either directly or indirectly.

Typically, the air fan and/or the heat exchanger is arranged within a hull-integrated section of the marine propulsion unit, and particularly of the azimuthing propulsion unit. In other words, the air fan and/or the heat exchanger is typically arranged within the main contour of the hull of the marine vessel. Particularly, the air fan and/or the heat exchanger is not integrated in the pod of the azimuthing propulsion unit. In some embodiments, the heat exchanger may be integrated in the pod of the azimuthing propulsion unit with the air fan not being integrated in the pod of the azimuthing propulsion unit.

Typically, the motor air cooling system is a closed loop air cooling system. Particularly, air within the motor air cooling system is cycled multiple times through the motor air cooling system. In some embodiments, the motor air cooling system is an open air cooling system. In some embodiments, the motor air cooling system may comprise a conditioning system for physical or chemical properties of the air, exemplarily for dehumidifying the air within the motor air cooling system. Typically, the motor air cooling system comprises a filter for filtering the air in the motor air cooling system. The filter may particularly be configured to filter dust or oil residues in the air.

The marine propulsions units described herein, and particularly the azimuthing propulsion units described herein, may be employed in a marine vessel. In particular, the marine vessel may comprise at least one marine propulsion unit according to embodiments described herein. Propelling a marine vessel using a marine propulsion unit according to embodiments described herein may improve maneuverability and efficiency of the marine vessel.

Typically, cooling a contra rotating motor with an outer rotor and an inner rotor of a marine propulsion unit, and in particular of an azimuthing marine propulsion unit, with the contra rotating motor comprising a perforated tube configured to transmit a torque of the outer rotor to a propeller unit and to support an outer rotor winding, comprises providing cooling air to the contra rotating motor and drawing the cooling air from the contra rotating motor via the perforated tube. Providing cooling air to the contra rotating motor and drawing the cooling air from the contra rotating motor typically comprises operating an air fan in a closed loop air cooling system.

Embodiments of the present disclosure provide marine propulsion units, particularly azimuthing propulsion units, with an improved cooling of the contra rotating motor and an improved efficiency. In particular, a homogeneous and efficient cooling of the contra rotating motor allows to operate the motor at higher power levels, with smaller motor dimensions and shields further components of the marine propulsion system from heat. In particular, embodiments of the present disclosure ensure an effective cooling of both the inner rotor and the outer rotor.

### BRIEF DESCRIPTION OF THE DRAWINGS

The accompanying drawings relate to embodiments of the disclosure and are described in the following:
- FIG 1a: schematically illustrates a marine propulsion unit according to the embodiments described herein;
- FIG 1b: schematically illustrates a marine propulsion unit according to the embodiments described herein;
- FIG 1c: schematically illustrates a marine propulsion unit according to the embodiments described herein;
- FIG 2: schematically illustrates a cross-sectional view of a dual rotor electric motor of a marine propulsion unit according to the embodiments described herein;
- FIG 3: schematically illustrates a detail of a marine propulsion unit according to the embodiments described herein;
- FIG 4: schematically illustrates a detail of a marine propulsion unit according to the embodiments described herein;
- FIG 5: schematically illustrates a method of cooling a contra rotating motor of a marine propulsion unit according to embodiments described herein.

### DETAILED DESCRIPTION OF EMBODIMENTS

Reference will now be made in detail to the various embodiments of the disclosure, one or more examples of which are illustrated in the figures. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield a further embodiment. It is intended that the description includes such modifications and variations. In the figures, elements may be depicted with exaggerated dimensions to improve the comprehensibility of the detailed description of embodiments. In particular, relations of lengths and widths of components shown may be distorted. Further, some elements may be depicted with enlarged dimensions while other elements in the same figure are depicted, relatively, with reduced dimensions.

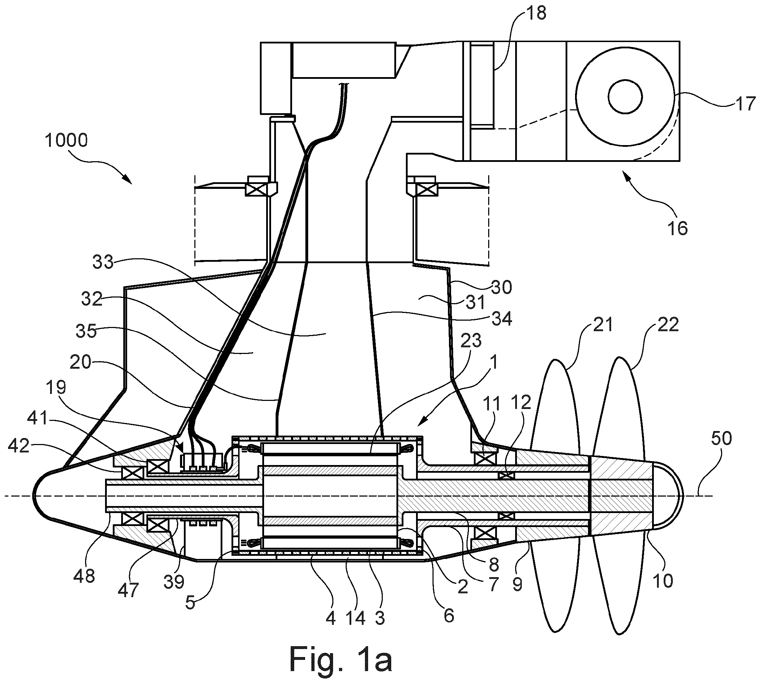

Fig. la schematically illustrates a marine propulsion unit, particularly in the embodiments of Fig. 1a - 1c an azimuthing propulsion unit, 1000 according to typical embodiments described herein. The azimuthing propulsion unit 1000 of Fig. 1a comprises a dual rotor electric motor 1. The dual rotor electric motor 1 may also be described as contra rotating electric motor. The dual rotor electric motor 1 is typically arranged substantially horizontally centrally within the azimuthing propulsion unit 1000. Particularly, the dual rotor electric motor 1 is arranged within a pod of the azimuthing propulsion unit 1000.

The dual rotor electric motor 1 comprises an inner rotor 2 and an outer rotor 3. The inner rotor 2 is arranged within the outer rotor 3. Inner rotor 2 and outer rotor 3 are arranged coaxially with respect to each other. The inner rotor 2 and the outer rotor 3 are configured to rotate about a rotation axis 50. The rotation axis 50 is a longitudinal axis of the azimuthing propulsion unit 1000. The inner rotor 2 drives an inner shaft propeller 10 and the outer rotor 3 drives an outer shaft propeller 9. The outer shaft propeller 9 and the inner shaft propeller 10 are arranged coaxially and rotate about the rotation axis 50. The outer shaft propeller 9 and the inner shaft propeller 10 form a contra rotating propeller unit. In the embodiment of Fig. 1a, the outer shaft propeller 9 and the inner shaft propeller 10 substantially have the same diameter. In embodiments not shown in Fig. 1a the outer shaft propeller 9 may have a diameter different from the diameter of the inner shaft propeller 10. Exemplarily, the outer shaft propeller 9 may have a diameter of at least 6 m, exemplarily of 6.1 m, and the inner shaft propeller 10 may have a diameter of at most 6 m, exemplarily of 5.575 m.

The outer rotor 3 of the dual rotor electric motor 1 typically comprises a perforated tube 4, as shown in the typical embodiment of Fig. 1a. The perforated tube 4 mechanically supports the outer rotor winding and comprises a plurality of openings. The plurality of openings of the perforated tube 4 are configured to pass air from an exterior of the dual rotor electric motor 1 into an interior of the dual rotor electric motor 1, and vice versa. Warm air, particularly heated by the dual rotor electric motor 1, may pass from an air gap 23 between the inner rotor 2 and the outer rotor 3 through the perforated tube 4 to an annular air channel 14.

The perforated tube 4 transmits a torque of the outer rotor 3 to outer rotor end flanges 5, 6. A non-drive end, NDE, outer rotor end flange 5 connects the perforated tube 4 to an NDE outer shaft 47. A drive end, DE, outer rotor end flange 6 connects the perforated tube 4 to a DE outer shaft 7. The DE outer shaft 7 transmits the torque of the outer rotor 3 to the outer shaft propeller 9. The outer shaft propeller 9 comprises a plurality of first blades 21, of which two are visible in Fig. 1a. The inner rotor 2 is connected to an NDE inner shaft 48 and to a DE inner shaft 8. The DE inner 8 shaft transmits the torque of the inner rotor 2 to the inner shaft propeller 10. The inner shaft propeller 10 comprises a plurality of second blades 22, of which two are visible in Fig. 1a. In the embodiment of Fig. 1a, the outer shaft propeller 9 and the inner shaft propeller 10 are arranged in a pulling configuration. In particular, the first blades 21 and the second blades 22 are configured to operate in a pulling mode.

The NDE inner shaft 48 is supported in the pod 30 by an NDE inner bearing 42. The NDE outer shaft 47 is supported in the pod 30 by an NDE outer bearing 41. The NDE outer bearing 41 and the NDE inner bearing 42 typically comprise an oil seal, respectively. The DE outer shaft 7 is supported in the pod 30 by a DE outer bearing 11. The DE inner shaft 7 is supported in the DE outer shaft 8 by a DE inner bearing 12. The DE outer bearing 11 and the DE inner bearing 12 typically comprise an oil and water seal, respectively.

The dual rotor electric motor 1 is provided with electric energy via a slip ring unit 19. The slip ring unit 19 is typically arranged on the non-drive end side of the dual rotor electric motor 1 and particularly to contact the NDE outer shaft 47 as shown in Fig. 1a. The NDE outer shaft 47 and the NDE outer rotor end flange 5 are providing an electrical connection between the slip ring unit 19 to the dual rotor electric motor 1. The slip ring unit 19 comprises at least one sliding contact to transmit electricity from power supply cables 20 to the dual rotor electric motor 1 and particularly to the outer rotor 3 of the dual rotor electric motor 1. From the outer rotor 3, electricity is provided to windings of the dual rotor electric motor 1. The power supply cables 20 provide electrical power from a marine vessel, and particular from a power supply of the marine vessel to the dual rotor electric motor 1 via the slip ring unit 19. The slip ring unit 19 comprises a slip ring unit housing 39. The slip ring unit housing 39 separates the slip ring unit 19 from a further interior of the pod 30 and particularly is configured to prevent dust generated inside the slip ring unit 19, particularly generated by the at least one sliding contact of the slip ring unit 19, to escape to the interior of the pod 30.

Inside the pod 30 of the azimuthing propulsion unit 1000, air is circulated. The azimuthing propulsion unit 1000 comprises a cooling air unit 16. In the embodiment of Fig. 1a, the cooling air unit 16 is arranged within a hull of a marine vessel. In the typical embodiment shown in Fig. 1a, the cooling air unit 16 comprises an air fan 17 to circulate air. The cooling air unit 16 typically comprises a heat exchanger 18. By the heat exchanger 18, warm air entering the heat exchanger 18 from the pod 30 is cooled with heat being at least partially transferred to a cooling agent of the heat exchanger 18. The cooling air unit 16 provides cool air to the dual rotor electric motor 1 via a DE ingoing air channel 31 and an NDE ingoing air channel 32 in the pod 30. The DE ingoing air channel 31 is physically separated from an outgoing air channel 33 by an DE air channel separating wall 34 in Fig. 1a. The NDE ingoing air channel 32 is physically separated from the outgoing air channel 33 by an NDE air channel separating wall 35 in Fig. 1a. Typically, the outgoing air channel 33 substantially extends in the center of the pod 30 and particularly along a vertical central axis of the pod 30. Air passing through the DE ingoing air channel 31 and/or the NDE ingoing air channel 32 passes through openings of the perforated tube 4 and/or the outer rotor end flanges 5, 6 into an interior of the dual rotor electric motor 1. Within the dual rotor electric motor 1, the air may be heated by the dual rotor electric motor 1, in particular when in operation. The air may exit the dual rotor electric motor 1 via radial openings of the perforated tube 4 towards the annular air channel 14. The annular air channel 14 is connected to the outgoing air channel 33.

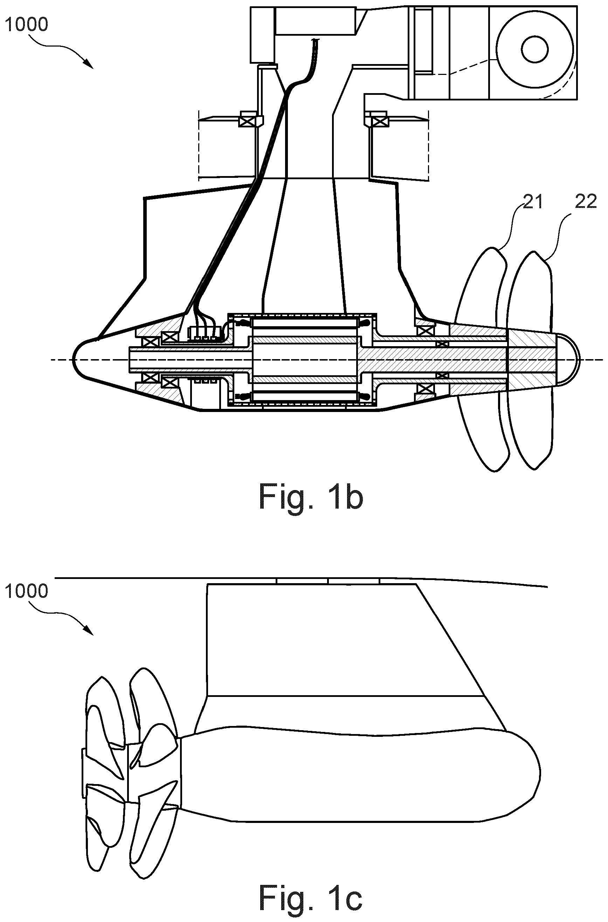

In Fig. 1b, the azimuthing propulsion unit 1000 is configured to operate in a pushing mode. In particular, the first blades 21 and the second blades 22 are configured to operate in a pushing mode. In Fig. 1c, a side view of the azimuthing propulsion unit 1000 of the embodiment of Fig. lb is schematically shown.

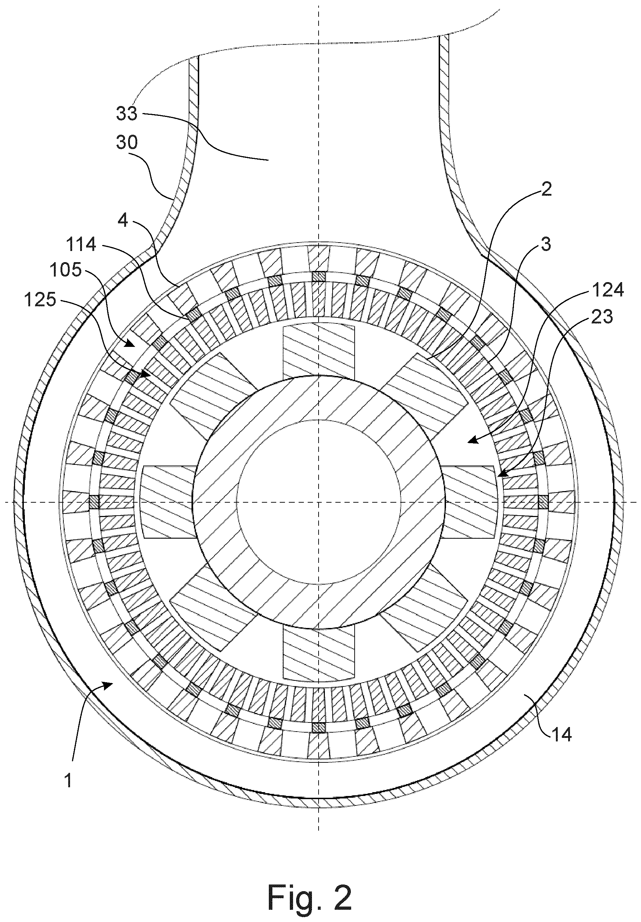

In Fig. 2, the dual rotor electric motor 1 is shown in a cross-sectional view. In Fig. 2, the cross-sectional view along a plane perpendicular to the rotating axis 50 of Fig. 1a at a central position of the dual rotor electric motor 1 is shown. The dual rotor electric motor 1 is arranged within the pod 30 of the marine propulsion system. Between a wall of the pod 30 and the dual rotor electric motor 1, the annular air channel 14 is present. Through the annular air channel 14, the air exiting the dual rotor electric motor 1, and particularly exiting the outer rotor 3, may pass to the outgoing air channel 33. At the position of the cross-sectional view of Fig. 2, air inside the dual rotor electric motor 1 may exit the dual rotor electric motor 1 towards the outgoing air channel 33. The inner rotor 2 of the dual rotor electric motor 1, having a free space 124 between poles of the inner rotor 2 for air passing along the inner rotor 2, is arranged within the outer rotor 3. Between the inner rotor 2 and the outer rotor 3, an air gap 23 is present. The outer rotor 3 comprises an outer rotor winding installed in an outer rotor core. The outer rotor core comprises cooling air slots 125 arranged in a radial direction to allow air to flow from the inner rotor 2 and the outer rotor winding towards the outgoing air channel 33 via the perforated tube 4. The perforated tube 4 is connected with the outer rotor 3 via a plurality of axial beams 114. The perforated tube 4 comprises a plurality of radial openings 104. Particularly, the perforated tube 4 comprises a plurality of first openings connected to the at least one ingoing air channel (not shown in Fig. 2) and a plurality of second openings 105 connected to the outgoing air channel 33.

In some embodiments, particularly at axial positions towards the axial ends of the dual rotor electric motor 1, air may enter the dual rotor electric motor 1 through the radial openings. A cross-sectional view at such a position (not shown in the figures) could resemble the cross-sectional view shown in Fig. 2 with the air flow being inverted. Geometrical relations described for the cross-sectional view of Fig. 2 may thus be applicable to axial positions towards the axial ends of the dual rotor electric motor 1 as well.

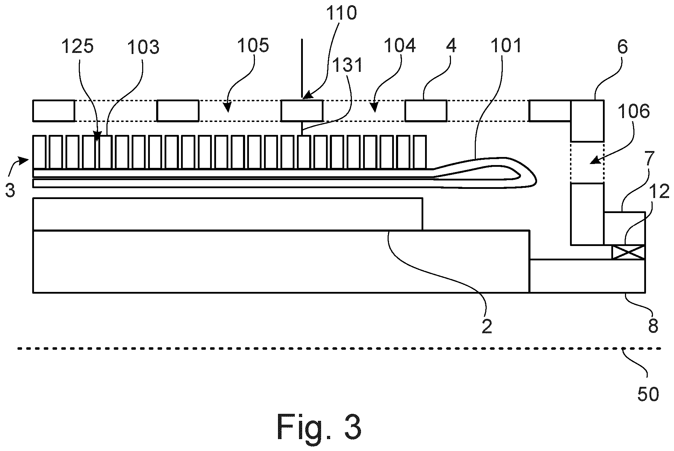

In Fig. 3, a detail of a marine propulsion unit according to embodiments described herein in a longitudinal cross-section. In Fig. 3, part of the dual rotor electric motor is shown. The inner rotor 2 and the outer rotor 3 rotate about the rotational axis 50, particularly in opposite directions. The inner rotor 2 is connected to the drive end shaft 8. The outer rotor 3 is connected to the perforated tube 4 via a plurality of axial beams (not shown in Fig. 3). The perforated tube 4 is configured to transmit the torque via the drive end outer rotor end flange 6 to the drive end outer shaft 7. The drive end outer rotor end flange 6 comprises at least one flange opening 106. The at least one flange opening 106 is configured to allow air entering from the at least one ingoing air channel into the dual rotor electric motor. The perforated tube 4 comprises a plurality of first openings 104 connected to the at least one ingoing air channel and a plurality of second openings 105 connected to the outgoing air channel. The outer rotor comprises the outer rotor winding 101 and the outer rotor core 103. The outer rotor core 103 comprises a plurality of cooling air slots 125 arranged in a radial direction to allow air to flow between the outer rotor winding 101 and the perforated tube 4. From the first openings 104, air can flow through the plurality of cooling air slots 125 to the outer rotor winding 101 and the inner rotor 2. An air sealing 131 is arranged between the perforated tube 4 and the outer rotor core 103 to separate the first openings 104 and the second openings 105. Between the static ingoing air channel and outgoing air channel and the rotatable perforated tube 4, an outer rotor air sealing 110 is arranged. The outer rotor air sealing 110 may be connected to the at least one air channel separating wall (not shown in Fig. 3). The outer air sealing 110 comprises a small gap.

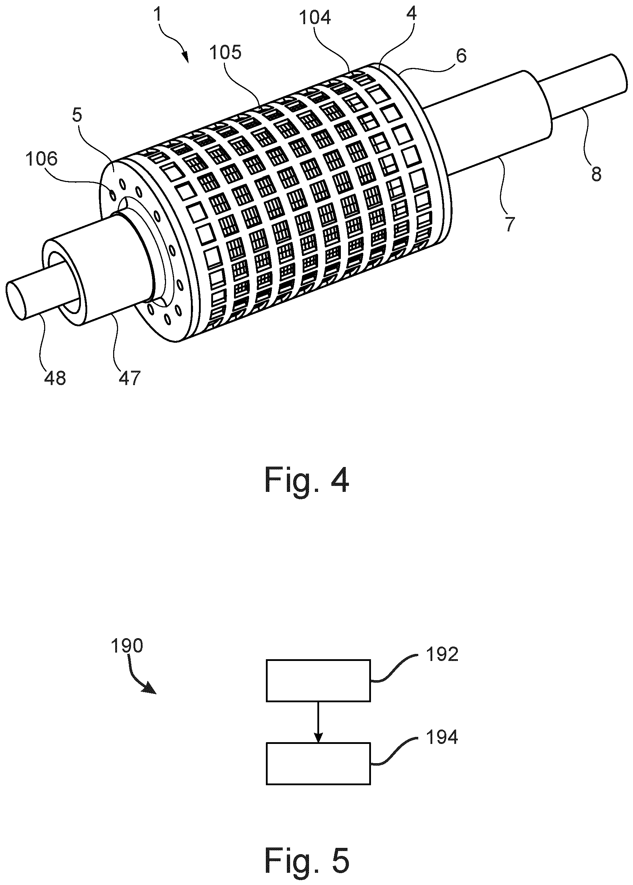

Fig. 4 shows a detail of the marine propulsion system, in particular the dual rotor electric motor 1, in a side view. The inner rotor is connected to the DE inner shaft 8 and the NDE inner shaft 48. The outer rotor is connected to the perforated tube 4. The perforated tube 4 transmits the torque of the outer rotor to the DE outer shaft 7 via the DE outer rotor end flange 6. The perforated tube 4 transmits the torque of the outer rotor to the NDE outer shaft 47 via the DE outer rotor end flange 5. The DE outer rotor end flange 5 comprises a plurality of flange openings 106. The plurality of flange openings 106 are arranged substantially symmetrical around a rotation axis of the perforated tube 4 and/or the dual rotor electric motor 1. The perforated tube 4 comprises a plurality of radial openings. The plurality of radial openings comprises a plurality of first openings 104 and a plurality of second openings 105. In the embodiments of Fig. 4, the plurality of radial openings are substantially quadratically with rounded corners. In the embodiments of Fig. 4, the plurality of radial openings are arranged in a substantially rectangular, and particularly quadratical, pattern.

Fig. 5 shows a method 190 of cooling a contra rotating electric motor, or a dual rotor electric motor, with an outer rotor and an inner rotor, of a marine propulsion unit. The method comprises providing 192 cooling air to the contra rotating motor and drawing 194 the cooling air from the contra rotating motor via the perforated tube.

## Claims

1. A marine propulsion unit (1000) with a motor air cooling system and a contra rotating electric motor (1) having an inner rotor (2) and an outer rotor (3), wherein
the contra rotating motor comprises a perforated tube (4) with a plurality of radial openings (104, 105), the perforated tube being configured to transmit a torque of the outer rotor to a propeller unit and to support an outer rotor winding;
the motor air cooling system comprises at least one ingoing air channel (31, 32) and at least one outgoing air channel (33); and
the at least one ingoing air channel is connected to the at least one outgoing air channel via at least some of the plurality of radial openings of the perforated tube.

2. The marine propulsion unit of claim 1, wherein
the propeller unit comprises a contra rotating propeller (9, 10);
the inner rotor is configured to drive an inner shaft (8, 48) connected to an inner shaft propeller (10) of the contra rotating propeller; and
the outer rotor is configured to drive an outer shaft (7, 47) connected to an outer shaft propeller (9) of the contra rotating propeller.

3. The marine propulsion unit of any of the preceding claims, wherein
the outer rotor is connected to the outer shaft via at least one outer rotor end flange (5, 6), and
the at least one outer rotor end flange comprises at least one flange opening (106).

4. The marine propulsion unit of any of the preceding claims, wherein the perforated tube comprises at least 50 radial openings.

5. The marine propulsion unit of any of the preceding claims, wherein
the plurality of radial openings is arranged substantially symmetrically with respect to the perforated tube; and/or
the plurality of radial openings is equally spaced with respect to each other in at least one dimension.

6. The marine propulsion unit of any of the preceding claims, wherein the plurality of radial openings cover at least 20% of a side surface of the perforated tube.

7. The marine propulsion unit of any of the preceding claims, wherein the outer rotor comprises a plurality of radial slots (125) in a core (103) of the outer rotor winding (101).

8. The marine propulsion unit of any of the preceding claims, wherein the outer rotor comprises a plurality of axial beams (114) between a core of the outer rotor winding and the perforated tube.

9. The marine propulsion unit of any of the preceding claims, wherein at least 80% of air passing through the at least one ingoing air channel enters the at least one outgoing air channel via the perforated tube.

10. The marine propulsion unit of any of the preceding claims, wherein
the motor air cooling system is configured to first guide air along an axial direction of the perforated tube and subsequently in a radial direction of the perforated tube, and
wherein the motor air cooling system is preferably configured such that a temperature of the air remains substantially identical in axial direction.

11. The marine propulsion unit of any of the preceding claims, wherein the motor air cooling system is arranged such that air from the at least one ingoing air channel enters the contra rotating motor via the at least one flange opening and exits the contra rotating motor via at least part of the plurality of radial openings.

12. The marine propulsion unit of any of the preceding claims, wherein
the plurality of radial openings comprises first openings (104) connected to the at least one ingoing air channel and comprises second openings (105) connected to the at least one outgoing air channel; and
the motor air cooling system is arranged such that at least part of the air from the at least one ingoing air channel enters the contra rotating motor via the first openings and exits the contra rotating motor via the second openings.

13. The marine propulsion unit of any of the preceding claims, wherein
the motor air cooling system further comprises an air fan (17) and a heat exchanger (18);
the air fan and the heat exchanger are arranged within a hull-integrated section of the marine propulsion unit; and
the motor air cooling system is a closed loop air cooling system.

14. A marine vessel comprising a marine propulsion unit according to any of the preceding claims.

15. A method (190) of cooling a contra rotating electric motor with an outer rotor and an inner rotor of a marine propulsion unit, the contra rotating motor comprising a perforated tube configured to transmit a torque of the outer rotor to a propeller unit and to support an outer rotor winding, the method comprising:
providing (192) cooling air to the contra rotating motor; and
drawing (194) the cooling air from the contra rotating motor via the perforated tube.
